# EUROPEAN PATENT SPECIFICATION

(11) **EP 0 611 783 B1**
(45) Date of publication and mention of the grant of the patent: **01.04.1998**
(21) Application number: 94810069.8
(22) Date of filing: 08.02.1994
(51) Int. Cl.: C08F 230/08, C09J 143/04

(54) **Copolymers of (meth)acryloxy-alkyl-siloxysilane and alkyl(meth)acrylates and the use thereof as pressure sensitive adhesives**
Copolymere von (meth)Acryloxy-Alkyl-Siloxysilane und Alkyl(meth)acrylate und deren Verwendung als druckempfindliche Klebstoffe
Copolymères de (meth)acryloxy-alcoyl-siloxysilanes et de (meth)acrylates d'alcoyl et leur usage comme adhésifs sensibles à la pression

(30) Priority: 17.02.1993 US 18667
(43) Date of publication of application: 24.08.1994
(73) Proprietor: Novartis AG, 4058 Basel (CH)
(72) Inventor: Li, Xiaoling, Pleasanton, CA 94588 (US); Berner, Bret, Scarsdale, NY 10583 (US)

(56) References cited:
- GB-A- 1 444 110
- US-A- 4 981 902

## Description

The present invention relates to the use as a medical adhesive of copolymers of certain siloxy silanes and alkyl (meth)acrylates. It further relates to pressure sensitive adhesives, especially medical adhesives. In addition, the invention further relates to transdermal and transmucosal drug delivery products and the pressure sensitive medical adhesives used therein.

Pressure sensitive adhesives (PSA) have been widely used in various fields for holding, protecting, sealing, and masking purposes. One application to the medical field is to the area of transdermal therapeutic systems (TTS). In the context of this specification, unless specified otherwise, the term "transdermal" will refer collectively to transdermal and transmucosal and the term "skin" will refer respectively to skin or mucosa depending on whether a transdermal or transmucosal therapeutic system is under consideration. In addition to the general requirements for PSAs for general use, TTS require that PSAs be nonirritating to the skin, be physically and chemically compatible with the drug(s) being administered, and be moisture resistant. PSAs must also adhere well to the skin, provide intimate contact of the TTS with the skin surface during application, and leave no residue upon removal.

PSAs that have been used in TTS are, among others, polyacrylates and polydimethylsiloxanes. For example, alkyl acrylates are tacky and pressure-sensitive and, therefore, do not require the addition of tackifying agents or plasticizers. Polydimethylsiloxanes (silicones) have been considered biocompatible and oxygen permeable. It is apparent that a PSA composed of acrylic and organic silicone types of polymers and retaining advantageous properties of each is desirable for use in TTS.

It has been known that a PSA should have a balance of cohesive and adhesive strength. Such a balance has been attempted by incorporating two or more components with different properties by blending polymers or in some instances by copolymerization. Polyalkyl acrylates, especially polyethylhexyl acrylate, are generally known as tacky, low glass transition temperature polymers. By incorporating a component with a higher glass transition temperature and higher cohesive strength, an improvement of properties suitable for exploitation in a TTS is expected.

It is an object of the invention to provide a pressure sensitive adhesive suitable for use in medical practice, especially in transdermal and transmucosal drug delivery systems.

Surprisingly, these and other objects of the invention are realized with the use as a medical adhesive of a copolymer of a silyloxy silane monomer of formula I with an alkyl (meth)acrylate monomer of formula II and optionally other vinylic copolymerizable monomers. The silyloxy silane monomer is represented by the formula 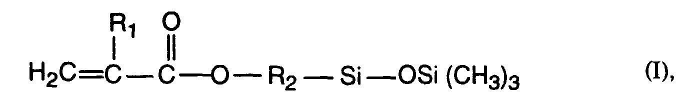 wherein R₁ is hydrogen or methyl, and R₂ is C₁₋₆alkylene. The alkyl (meth)acrylate monomer is represented by the formula 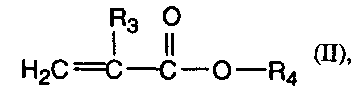 wherein R₃ is hydrogen or methyl, and R₄ is methyl or is unsubstituted linear or branched alkyl of 2-10 carbon atoms or mixtures thereof. Either of these two components comprises 42-58 mol % of the total monomer feed (exclusive of any polymerization initiator and crosslinker which may be present). The remainder is optionally made up of at least one copolymerizable vinylic monomer. In addition, the monomer feed contains a suitable amount of a polymerization initiator, and, where desirable, a crosslinking agent. The most preferred embodiment is when R₁ is methyl, R₂ is propyl, n is zero, R₃ is hydrogen, and R₄ is 2-ethylhexyl and the only monomers in the feed are those of formula I and formula II.

The present invention relates to the use as a medical adhesive of a copolymer composed of at least two monomers, the silyloxy silane of formula I and the alkyl (meth)acrylate of formula II. Neglecting the polymerization initiator and any crosslinking agent that may be present, either or both of these monomers are fed into the polymerization reaction in amounts of 42 mol % to 58 mol %. The remainder to make up 100 mol % of the monomer feed may be another copolymerizable vinylic monomer. In the case where one of the two primary monomers of formula I and formula II, but not both, is below 42 mol % of the monomer feed, the balance can be made up from the additional copolymerizable vinylic monomer. Unless specifically stated otherwise, any monomer feed mol percent given will neglect any concentration of initiator and crosslinking agent which may be present.

The preferred silyloxy silane is represented by formula I, in which R₁ is hydrogen or methyl, preferably methyl, R₂ is linear chain alkylene of 1 to 6 carbon atoms, preferably 2-5 carbon atoms, more preferably 3 or 4 carbon atoms, and most preferably n-propyl. The most preferred compound of formula I is 3-methacryloxypropyl-tris(trimethylsilyloxy)-silane.

Other silyloxy silane compounds of formula I which are particularly suitable for preparing the claimed copolymer according to the present invention include, but are not limited to:
2-acryloxyethyl-tris(trimethylsilyloxy)-silane, and 2-methacryloxyethyl-tris(trimethylsilyloxy)-silane.

Also suitable are those corresponding compounds (I) wherein R₂ is ethylene substituted at the 1-carbon atom adjacent to the silicon with one methyl and substituted at the 2-carbon atom with acryloxy or methacryloxy groups.

Also suitable are those corresponding compounds (I) wherein R₂ is n-propyl substituted at the 2- or 3-carbon atom or n-butyl substituted at the 2-, 3- or 4-carbon atom adjacent to the silicon with acryloxy or methacryloxy groups.

Also suitable are those corresponding compounds (I) wherein R₂ is ethylene substituted at the 1-, at the 2-carbon atom, or at the 1- and 2-carbon atoms adjacent to the silicon with two methyl groups and substituted at the 2-carbon atom with acryloxy or methacryloxy groups.

Also suitable are those corresponding compounds (I) wherein R₂ is n-propyl substituted at the 1- or at the 2-carbon atom adjacent to the silicon with methyl and substituted at the 2- or 3-carbon atom with acryloxy or methacryloxy groups.

The preferred alkyl (meth)acrylate is represented by the formula II, wherein R₃ is hydrogen or methyl, preferably hydrogen, and R₄ is branched or linear chain, preferably branched, alkyl of 1-10 carbon atoms, preferably 4-10 carbon atoms, more preferably 6-10 carbon atoms, even more preferably 8 carbon atoms, and most preferably 2-ethylhexyl.

Compounds of formula II particularly suitable for the instant invention include, but are no limited to: acrylate and methacrylate esters of the following unsubstituted alcohols: methanol, ethanol, propanol, isopropanol, n-butanol, 2-butanol, 2-methylpropanol, tert-butanol, n-pentanol, 1-, 2- or 3-methylbutanol, 1,1-, 1,2- or 2,2-dimethylpropanol, 1-ethylpropanol, n-hexanol, 1- or 2-ethylbutanol, n-heptanol, 1-, 2- or 3-ethylpentanol, n-octanol, 1-, 2-, 3-, or 4-ethylhexanol, 2-ethyl-1-methylpentanol, 2-isopropylpentanol, 1,2-diethylbutanol, n-nonol, 1- or 2-ethylheptanol, 2-ethyl-1-methylhexanol, 2-ethyl-2-methylhexanol, 2-isopropylhexanol, n-decanol, 2-ethyloctanol, and 2,2-diethylhexanol.

The additional vinylic copolymerizable monomer is a monomer which can be polymerized together with the monomers of formulae I and II, but are not within the scope of formulae I or II. These monomers fall into two groups. Group A includes compounds which are substituted alkyl acrylates represented by the formula 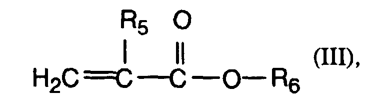 in which R₅ is hydrogen or methyl and R₆ is branched or linear substituted alkyl of 1-10 carbon atoms, preferably 4-10 carbon atoms, more preferably 6-10 carbon atoms, and most preferably 8 carbon atoms. The componds of formula III are selected from the same group as those of formula II except that those of formula III are substituted at the group R₆ while those of formula II are unsubstituted at the corresponding group R₄. The group R₆ is substituted with at least one substituent. Multiple substituents are preferably identical. Those substituents are selected from the group consisting of hydroxy, C₁₋₄alkoxy, halogen, carboxy, C₁₋₄alkoxycarbonyl, C₁₋₄alkylcarbonyloxy, amino, preferably hydroxy. Typical examples include, but are not limited to:
Mono-acrylate and mono-methacrylate esters of the following alcohols, which alcohols are further substituted as set forth below: methanol, ethanol, propanol, isopropanol, n-butanol, 2-butanol, 2-methylpropanol, tert-butanol, n-pentanol, 1-methylbutanol, 2- or 3-methylbutanol, 1,1-dimethylpropanol, 1,2-dimethylpropanol, 2,2-dimethylpropanol, 1-ethylpropanol, n-hexanol, 1- or 2ethylbutanol, n-heptanol, 1-ethylpentanol, 2- or 3-ethylpentanol, n-octanol, 1-, 2-, 3- or 4-ethylhexanol, 2-ethyl-1-methylpentanol, 2-isopropylpentanol, 1,2-diethylbutanol, n-nonol, I-ethylheptanol, 2-ethylheptanol, 2-ethyl-1-methylhexanol, 2-ethyl-2-methylhexanol, 2-isopropylhexanol, n-decanol, 2-ethyloctanol, and 2,2-diethylhexanol.

The alcohols, which are further substituted, include those substituted by hydroxy, such as ethylene glycol, propylene glycol, glycerol, butylene glycol, 1,2,3-butanetriol, 1,4,6-hexanetriol, 2-hydroxyethylhexanol, 4-hydroxy-2-ethylhexanol, 4-hydroxymethyl-2-ethylpentanol, and 4-hydroxy-2-hydroxyethylhexanol, those substituted by C₁₋₄alkoxy, such as methoxy, ethoxy, propoxy, isopropoxy, and butoxy, such as 3-methoxy-2-ethylhexanol or 4-ethoxy-2-ethyl-1-methylpentanol, halogen selected from Cl, F, and Br, such as 2-chloro-octanol or 2-(2-fluoroethyl)hexanol, carboxy, such as (1-carboxy or 2-carboxy)-2-ethylhexanol, amino, such as l-amino-2-ethylhexanol; as well as those having more than one substituent which are not identical, for example 1-amino-1-carboxy-2-ethylhexanol. Group A monomers further include vinylic acids such as (meth)acrylic acid, maleic acid, fumaric acid, itaconic acid, cinnamic acid, crotonic acid, 2-(meth)-acroyloxyethyl sulfonic acid, 2-(meth)acrylamido-2-methylpropane sulfonic acid, vinyl sulfonic acid, p-styrene sulfonic acid, and allyl sulfonic acid. When present, these optional monomers do not exceed 5 mol %, preferably do not exceed 2.5 mol %, more preferably do not exceed 1 mol % of the total monomer feed.

The other group of the optional vinylic copolymerizable monomers, Group B, are non-(meth)acrylic vinylic monomers or they are (meth)acrylate amides, sulfonates or phosphonates. Examples include, without limitation: Mono- and dimethyl fumarate, diethyl fumarate, mono- and diisopropyl fumarate, mono- and dimethyl maleate, mono- and diisopropyl itaconate, mono- and diphenyl fumarate, methyl-phenyl-fumarate, bis-hydroxyethylmaleate, bis-hydroxyethylfumarate, allyl alcohol, beta-allylethanol, vinylethylcarbinol, 2-hydroxyethylvinyl ether, vinyl acetate, vinyl alcohol, methyl-vinyl ether, vinyl propionate, vinyl benzoate, N-(1,1-dimethyl-3-oxobutyl)acrylamide, 2-hydroxyethyl-(meth)acrylamide, 2-hydroxypropyl-(meth)acrylamide, 3-hydroxypropyl(meth)acrylamide, 2,3-dihydroxypropyl-(meth)acrylamide, poly(ethoxy)-ethyl(meth)acrylamide, poly(ethoxy)-propyl(meth)acrylamide, sucrose (meth)acrylate, mannose (meth)acrylate, glucose (meth)acrylate, sorbitol (meth)acrylate, (meth)acrylamide, N-methyl and N,N-dimethyl(meth)acrylamide, N-2-hydroxyethyl(meth)acrylamide, N-3-hydroxypropyl(meth)acrylamide, bis- acetone (meth)acrylamide, methylol (meth)acrylamide, vinyl formamide, vinyl acetamide, diacetophenone, allyloxyethane, N-vinyl pyrrolidone, N-vinyl acetamide, acrylonitrile, styrene, alpha-methylstyrene, t-butylstyrene, C₁₋₄alkoxy-C₁₋₄alkyl (meth)acrylate and (meth)acrylamide, and the(meth)acrylates and (meth)acrylamides of the following groups: benzyl, t-butylphenyl, cyclohexyl, trimethylcyclohexyl, isobornyl, dicyclopentadienyl, norbornyl-methyl, glycidyl, C₁₋₄alkylthio-C₁₋₄alkyl, furfuryl, 2-(2-ethoxyethoxy)ethyl, hexafluoroisopropyl, 1,1,2,2-tetrahydroperfluorododecyl, N,N-diethyl-aminoethyl, and N-t-butyl-aminoethyl. Still other monomers within this group include 2- or 4-vinyl pyridine, 2- or 4-methyl-5-vinyl pyridine, N-methyl-4-vinyl pyridine, 1-vinyl imidazole, 2-methyl-1-vinyl imidazole, p-aminostyrene, o-aminostyrene, (dimethylaminoethyl)vinyl ether, vinyl pyrrolidine, 2-hydroxyethyl fumarate, bis-(2-hydroxyethyl) fumarate, 2-hydroxyethyl maleate, di-(2-hydroxyethyl)maleate, 2-hydroxyethyl itaconate, bis-(2-hydroxyethyl) itaconate, butyl-3-hydroxypropyl-bis-(hydroxy-poly lower alkyleneoxide)fumarate, bis-(hydroxy-poly lower alkyleneoxide) maleate, bis-(hydroxy-poly loweralkyleneoxide) itaconate, or 2-phosphonatoethyl (meth)acrylate.

When these monomers are used in the embodiment in which the unsubstituted alkyl(meth)acrylate of formula II makes up less than 42 mol % of the monomer feed, they can be present in an amount not to exceed about 29 mol % of the total monomer feed, preferably about 25 mol %, more preferably not more than 15 mol %, more preferably not more than 10 mol %, even more preferably not more than 5 mol % of the total monomer feed. In the embodiment wherein the silyloxy silane of formula I is present less than 42 mol %, these monomers can be present in amounts not more than about 36 mol % of the total monomer feed, preferably mot more than 31 mol %, more preferably not more than 15 mol %, more preferably not more than 10 mol %, even more preferably not more than 5 mol % of the total monomer feed. In those embodiments wherein these additional optional monomers and the substituted alkyl(meth)acrylates of formula III are present simultaneously, the amounts set forth in this paragraph are inclusive of the amounts of the substituted alkyl(meth)acrylate monomers of formula III.

In embodiments in which both the compounds of formula I and formula II are present in amounts of or greater than 42 mol % of the monomer feed, the balance can be made up of no more than 5 mol %, preferably 2.5 mol %, more preferably 1 mol % of the monomers of Group A mentioned above, with any remainder being selected from the additional optional monomers of Group B set forth above.

Preferred embodiments of the present invention include polymers having a polymerization feed mixture of
(a) an effective amount of a polymerization initiator;
(b) 0 to 5 mol %, based on the total of all monomers present of a vinylic copolymerizable crosslinker; and
(c) one of the following groups (i), (ii), or (iii);
   where (i) is
      (I) 42 mol % to 58 mol % of a silyloxy silane of formula I,
      (II) 42 mol % to 58 mol % of an unsubstituted alkyl (meth)acrylate of formula II,
      (III) 0 to 5 mol % of a Group A monomer, and
      (IV) 0 to 16 mol % of an additional vinylic copolymerizable monomer of Group B; or
   where (ii) is
      (I) 42 mol % to 58 mol % of a silyloxy silane of formula I,
      (II) 21 mol % up to less than 42 mol % of an unsubstituted alkyl (meth)acrylate of formula II,
      (III) 0 to 5 mol % of a Group A monomer, and
      (IV) 0 to 29 mol % of an additional vinylic copolymerizable monomer of Group B; or
   where (iii) is
      (I) 16 mol % up to less than 42 mol % of a silyloxy silane of formula I,
      (II) 42 mol % to 58 mol % of an unsubstituted alkyl (meth)acrylate of formula II,
      (III) 0 to 5 mol % of a Group A monomer, and
      (IV) 0 to 36 mol % of an additional vinylic copolymerizable monomer of Group B;
wherein in formula I R₁ is defined as hydrogen or methyl; R₂ is alkyl of 1-6 carbon atoms;
and wherein in formula II R₃ is defined as hydrogen or methyl; and R₄ is methyl or linear or branched chain C₂₋₁₀alkyl which is unsubstituted;
and wherein Group A monomers are selected from (meth)acrylic acid, itaconic acid, cinnamic acid, crotonic acid, fumaric acid, maleic acid, 2-(meth)acroyloxyethyl sulfonic acid, 2-(meth)acrylamido-2-methylpropane sulfonic acid, vinyl sulfonic acid, p-styrene sulfonic acid, allyl sulfonic acid, and monomers of formula III, in which R₅ is hydrogen or methyl and R₆ is a substituted linear or branched alkyl group of up tp 10 carbon atoms, said substituent being selected from the group consisting of hydroxy, C₁₋₄alkoxy, Cl, Br, F, carboxy, C₁₋₄alkoxycarbonyl, C₁₋₄alkylcarbonyloxy, and amino; and said additional vinylic copolymerizable monomer is neither a polymerization initiator, a crosslinker, nor a member of the group of compounds of formulae I, or II, nor a member of Group A as defined above, but is a mono-unsaturated monomer which is copolymerizable with compounds of formulae I, II, and members of Group A.

The foregoing monomers of formula I, formula II, the optional monomers of Group A and the optional additional vinylic copolymerizable monomers of Group B are all available commercially or readily synthesized by procedures and processes commonly available and known to those of ordinary skill in the art as are the initiators and crosslinkers, which may also be present as discussed below. Typical commercial sources of these monomers include, but are not limited to: Huls America Inc. (Piscataway, N.J. USA), Shin-Etsu Chemical Co. (Tokyo, Japan), and Aldrich Chemical Company (Milwaukee, Wisconsin USA).

The most preferred copolymers used in the invention are those which consist of formula I and formula II without any monomers of formula III or any other optional vinylic copolymerizable monomer being added. Within this group, the single most preferred polymer is 3-methacryloxypropyl-tris(trimethylsilyloxy)-silane as the sole compound of formula I and 2-ethylhexyl acrylate as the sole compound of formula II.

Polymerization is carried out by mixing the desired ratios of the monomers with an appropriate polymerization initiator, whether UV or heat polymerization initiator, and where desirable with an appropriate amount of a suitable crosslinker. The polymerization mixture is then exposed to either UV irradiation or heat.

Typical thermal initiators include, but are not limited to: 2,2'-azo-bis-(2-amidinopropane) hydrochloride, 4,4' -azo-bis-4-cyanovaleric acid, 1,1'-azo-bis-cyclohexanecarbonitrile, 2,2'-azo-bis-2,4-dimethylvaleronitrile, 2,2'-azo-bis-4-methoxy-2,4-dimethylvaleronitrile, 2,2'-azo-bis-isobutyronitrile, 2,2'-azo-bis-2-methylbutyronitrile, benzoyl peroxide, lauryl peroxide, decanoyl peroxide, acetyl peroxide, succinic acid peroxide, methyl-ethyl-ketone peroxide, propionyl peroxide, pelargonyl peroxide, p-chloro-benzoyl peroxide, bis-1-hydroxycyclohexylperoxide, dimethyl-2,2'-azobisisobutyrate, isopropyl percarbonate, tert-butyl peroctanoate, tert-butyl peroxyacetate, tert-butyl peroxypivalate, 2,5-dimethyl-2,5-bis-(2-ethylhexanoylperoxy)hexane, tert-butyl-peroxybutyrate, tert-butyl-peroxy maleic acid, tert-butyl-peroxy isopropyl carbonate, 1,1'-bis-cyclohexane carbonitrile and mixtures thereof.

Typical UV initiators include, without limitation: benzoin, alpha-methyl benzoin, benzoin methyl ether, benzoin ethyl ether, benzoin isopropyl ether, benzoin isobutyl ether, diketones, such as benzil and diacetal, acetophenone, tribromoacetophenone and the ortho-nitro derivative thereof, alpha,alpha-di(ethoxy)acetophenone, 1-hydroxycyclohexyl phenyl ketone, 2,2-dimethoxy-2-phenylacetophenone, 2-hydroxy-2-methyl-1-phenyl-1-propanone, benzophenone and its derivatives such as p,p'-tetramethylenediamine benzophenone, alpha-acryloximine esters such as benzil-(2-oxyethyl-oxycarbonyl)-alpha-monoxamine, benzil ketals such as benzil dimethyl ketal, benzil diethyl ketal, and 2,5-dichlorobenzil dimethyl ketal, phenothiazine, diisopropylxanthogen-disulfide, 2-methyl-1-[4-(methylthio)phenyl] -2-morpholinopropan-1-one, 2,2-dimethoxy-2-phenylacetophenone, 2-benzyl-2-dimethylamino-1-(4-morpholinophenyl)-butan-1-one; 2-hydroxy-2-methyl-1-phenylpropan-1-one; 2,4,6-trimethyl-benzoyldiphenylphosphine.

The typical range of molar ratios of monomer to initiator is 50:1 to 6000:1, preferably 50:1 to 1000:1, more preferably 50:1 to 500:1.

Typical crosslinkers include, but are not limited to: di(meth)acrylate ethylene glycol having 1 to 100 ethylene oxide units, preferably 1 to 20 ethylene oxide units, more preferably 1 to 10 ethylene oxide units, lower alkylenediol di(meth)acrylate provided that there are no geminal oxygen atoms in the alkylenediol portion, ethylene glycol divinyl ether, glycerol tri(meth)acrylate, allyl(meth)acrylate, trimethylolpropane tri- or tetra(meth)acrylate, pentaerythritol tri- or tetra-(meth)acrylate, divinyl benzene, divinyl ether, divinyl sulfone, bis-phenol-A-di-(meth)acrylate, ethoxylated bis-phenol-A-di-(meth)acrylate, methylene-bis-(meth)acrylate, dimethylene-bis-(meth)acrylate, N,N'-dihydroxyethylene-bis-(meth)acrylamide, hexamethylene-bis-(meth)acrylamide, decamethylene-bis-(meth)acrylamide, allyl maleate, diallyl maleate, triallyl melamine, diallyl itaconate, diallyl phthalate, triallyl phosphite, polyallyl sucrose, sucrose-di-(meth)acrylate, glucose-di-(meth)acrylate, etc.

The initiators and crosslinkers for use in the process for preparing the polymers used in the present invention are readily available commercially, for example from the aforementioned suppliers, or can be readily synthesized by generally known methods.

The initiator/monomer reaction mixture is typically exposed to the initiating conditions (heat or UV light) for a period of about 20 seconds to 30 minutes, preferably 40 seconds to 10 minutes, more preferably 1 minute to about 5 minutes, most preferably 1.5 minutes to about 2.5 minutes, after which, the initiating condition need not be maintained. For purposes of this disclosure the initiator and any crosslinker which may be present is neglected in calculating the mol percents in the monomer feed or final composition.

The copolymers used in the invention can be recovered from the reaction vessels in manners typically known such as precipitation from methanol and other typical solvents, such as ethanol, and ethyl acetate. The polymers used in the invention can then be utilized in any manner known for pressure sensitive adhesives. As stated earlier, the polymers are particularly advantageous for use in the medical adhesive area, especially as applied to transdermal drug delivery devices. Such devices have been widely described attempting to use other adhesives. Replacement of the adhesives in the devices described in the art with the instant copolymer adhesives results in achieving the objectives of the present invention. Specific embodiments of the invention are described in the dependent claims.

The following Examples are presented to illustrate, but not limit the claimed invention.

### EXAMPLES 1-13

3-methacryloxypropyl-tris-trimethylsilyloxy-silane (I) and 2-ethylhexylacrylate (II) are fed into a reaction vessel in the molar amounts set out in Table I below. Benzoin methyl ether is added in the amount indicated and the entire reaction mixture is exposed for two minutes to UV radiation of the indicated wavelength and intensity as set forth in Table I. The resultant mass is then dissolved in tetrahydrofuran and the polymer is precipitated from methanol.

**TABLE I**

| EX.# | AMOUNT I¹ | AMOUNT II¹ | AMOUNT BME² | WAVE³ LENGTH | POWER⁴ |
|---|---|---|---|---|---|
| 1 | 10 | 90 | 500 | 365 | 4 |
| 2 | 20 | 80 | 500 | 365 | 4 |
| 3 | 30 | 70 | 500 | 365 | 4 |
| 4 | 40 | 60 | 500 | 365 | 4 |
| 5 | 50 | 50 | 500 | 365 | 4 |
| 6 | 60 | 40 | 500 | 365 | 4 |
| 7 | 70 | 30 | 500 | 365 | 4 |
| 8 | 80 | 20 | 500 | 365 | 4 |
| 9 | 90 | 10 | 500 | 365 | 4 |
| 10 | 42 | 58 | 500 | 365 | 4 |
| 11 | 58 | 42 | 500 | 365 | 4 |
| 12 | 42 | 58 | 1000 | 365 | 4 |
| 13 | 42 | 58 | 1000 | 334 | 2 |

| | | | | | |
|---|---|---|---|---|---|
| ¹Molar Fraction based on Sum of I and II. | | | | | |
| ²Molar ratio of (sum of I and II) to Benzoin Methyl Ether | | | | | |
| ³Wavelength in nm of light used for photoinitiation | | | | | |
| ⁴Power of emitted light in milliwatt per cm² at surface of monomer solution | | | | | |

### EXAMPLES 14-22

The products of Examples 1-9 are analyzed for final product monomer content and the resultant polymers are evaluated for cohesive and adhesive strength. The results appear in Table II below.

**TABLE II**

| EXAMPLE # EXAMPLE # | PRODUCT OF COMPOSITION | FINAL POLYMER^{a} ADHESION^{b} | 180° PEEL |
|---|---|---|---|
| 14 | 1 | 78.2:21.8 | 0.77^{c} |
| 15 | 2 | 71.6:28.4 | 0.63^{c} |
| 16 | 3 | 62.8:37.2 | 0.97^{c} |
| 17 | 4 | 52.2:47.8 | 1.04^{c} |
| 18 | 5 | 46.8:53.2 | 1.37 |
| 19 | 6 | 38.2:61.8 | 0.06^{d} |
| 20 | 7 | 26.0:74.0 | 0.04^{d} |
| 21 | 8 | 17.0:83.0 | ----^{e} |
| 22 | 9 | 13.6:86.4 | ----^{e} |

| | | | |
|---|---|---|---|
| ^{a}Final polymer molar ratios of I:II | | | |
| ^{b}Peel Adhesion in Kg/cm | | | |
| ^{c}Cohesive failure was observed | | | |
| ^{d}Adhesives separated from backing material | | | |
| ^{e}No tack. | | | |

### EXAMPLES 23-28

The procedure of Example 1 is repeated except that either or both of the substituted alkyl (meth)acrylate of formula III (A) and the additional copolymerizable vinylic monomer (B) are also present. The particular components and amounts are set forth in Table m below.

**TABLE IIIa**

| EX. | AMT I¹ | AMT II¹ | MONOMER A^{b} | AMT A | MONOMER B^{c} | AMT B |
|---|---|---|---|---|---|---|
| 23 | 50 | 21 | ------ | ----- | vi-acetate | 29 |
| 24 | 50 | 21 | HEMA | 4 | vi-acetate | 25 |
| 25 | 20 | 50 | ------ | ----- | allyl alcohol | 30 |
| 26 | 20 | 50 | HEMA | 5 | allyl alcohol | 25 |
| 27 | 42 | 42 | ------ | ----- | N-vi-pyrrolidone | 16 |
| 28 | 42 | 42 | HEMA | 4 | N-vi-pyrrolidone | 12 |

| | | | | | | |
|---|---|---|---|---|---|---|
| ^{a}All amounts are mole % based on the sum of I+II+A+B. ^{b}HEMA = 2-HYDROXYETHYL METHACRYLATE | | | | | | |
| ^{c}vi = VINYL | | | | | | |

## Claims

1. Use as a medical adhesive of a polymer prepared from the polymerization feed mixture consisting of
(a) an effective amount of a polymerization initiator;
(b) 0 to 5 mol %, based on the total of all monomers present, of a vinylic copolymerizable crosslinker; and
(c) one of the following groups (i), (ii), and (iii);
wherein (i) is consisting of
(I) 42 mol % to 58 mol % of a silyloxy silane of formula I,
(II) 42 mol % to 58 mol % of an unsubstituted alkyl (meth)acrylate of formula II,
(III) 0 to 5 mol % of a Group A monomer, and
(IV) 0 to 16 mol % of an additional vinylic copolymerizable monomer of Group B;
where (ii) is consisting of
(I) 42 mol % to 58 mol % of a silyloxy silane of formula I,
(II) 21 mol % up to less than 42 mol % of an unsubstituted alkyl (meth)acrylate of formula II,
(III) 0 to 5 mol % of a Group A monomer, and
(IV) 0 to 29 mol % of an additional vinylic copolymerizable monomer of Group B; and
where (iii) is consisting of
(I) 16 mol % up to less than 42 mol % of a silyloxy silane of formula I,
(II) 42 mol % to 58 mol % of an unsubstituted alkyl (meth)acrylate of formula II,
(III) 0 to 5 mol % of a Group A monomer, and
(IV) 0 to 36 mol % of an additional vinylic copolymerizable monomer of Group B;
wherein in groups (i), (ii), and (iii) formula I is defined as follows: 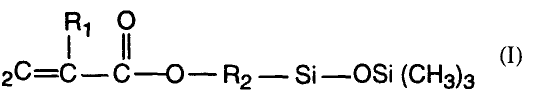 R₁ is defined as hydrogen or methyl; R₂ is alkylene of 1-6 carbon atoms; and wherein in groups (i), (ii), and (iii) formula II is defined as follows: 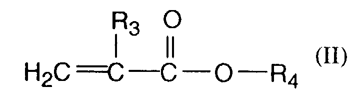 R₃ is defined as hydrogen or methyl; and R₄ is methyl or linear or branched chain C₂₋₁₀alkyl which is unsubstituted;
and wherein in groups (i), (ii), and (iii) a Group A monomer is a member selected from the group consisting of (meth)acrylic acid, itaconic acid, cinnamic acid, crotonic acid, fumaric acid, maleic acid, 2-(meth)acryloyloxyethyl sulfonic acid, 2-(meth)acrylamido-2-methylpropane sulfonic acid, vinyl sulfonic acid, p-styrene sulfonic acid, allyl sulfonic acid, and a monomer of formula III: 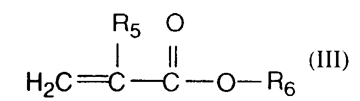 in which R₅ is hydrogen or methyl and R₆ is a linear or branched alkyl group of up to 10 carbon atoms substituted with at least one member selected from the group consisting of hydroxy, C₁₋₄alkoxy, Cl, Br, F, carboxy, C₁₋₄alkoxycarbonyl, C₁₋₄alkylcarbonyloxy, and amino; and said vinylic copolymerizable monomer of Group B is neither a polymerization initiator, a crosslinker, nor a member of the group of compounds of formulae I, or II, nor a member of Group A as defined above, but is a mono-unsaturated monomer which is copolymerizable with compounds of formulae I, II, and members of Group A.

2. Use as a medical adhesive of the polymer of claim 1 having the feed monomer composition of group (i).

3. Use as a medical adhesive of the polymer of claim 1 having the feed monomer composition of group (ii).

4. Use as a medical adhesive of the polymer of claim 1 having the feed monomer composition of group (iii).

5. Use as a medical adhesive of the polymer of claim 1 wherein the silyloxy silane of formula I comprises 45-55 mol % of the monomer feed composition.

6. Use as a medical adhesive of the polymer of claim 1 wherein the alkyl (meth)acrylate of formula II comprises 45-55 mol % of the monomer feed composition.

7. Use as a medical adhesive of the polymer of claim 1 wherein the siloxy silane of formula I comprises about 50 mole % of the monomer feed composition.

8. Use as a medical adhesive of the polymer of claim 1 wherein the alkyl (meth)acrylate of formula II comprises about 50 mol % of the monomer feed composition.

9. Use as a medical adhesive of the polymer of claim 1 wherein said feed monomer composition consists essentially of:
(a) 42 mol % to 58 mol % of the silyloxy silane of formula I; and (b) 42 mol % to 58 mol % of the alkyl (meth)acrylate of formula II.

## Patentansprüche

1. Verwendung eines Polymers als medizinischer Klebstoff, wobei dieses Polymer durch Polymerisation eines Beschickungsgemisches hergestellt worden ist, das besteht aus
(a) einer wirksamen Menge eines Polymerisationsinitiators,
(b) 0 bis 5 Mol-% bezogen auf die Gesamtmenge aller vorhandenen Monomeren, eines vinylischen copolymerisierbaren Vernetzers und
(c) einer der folgenden Gruppen (i), (ü) und (iii),
worin (i) besteht aus
(I) 42 Mol-% bis 58 Mol-% eines Silyloxysilans der Formel I,
(II) 42 Mol-% bis 58 Mol-% eines unsubstituierten Alkyl(meth)acrylats der Formel II,
(III) 0 bis 5 Mol-% eines Monomers der Gruppe A und
(IV) 0 bis 16 Mol-% eines weiteren vinylischen copolymerisierbaren Monomers der Gruppe B,
worin (ii) besteht aus
(I) 42 Mol-% bis 58 Mol-% eines Silyloxysilans der Formel I,
(II) 21 Mol-% bis zu weniger als 42 Mol-% eines unsubstituierten Alkyl(meth)acrylats der Formel II,
(III) 0 bis 5 Mol-% eines Monomers der Gruppe A und
(IV) 0 bis 29 Mol-% eines weiteren vinylischen copolymerisierbaren Monomers der Gruppe B. und
worin (iii) besteht aus
(I) 16 Mol-% bis zu weniger als 42 Mol-% eines Silyloxysilans der Formel I,
(II) 42 Mol-% bis 58 Mol-% eines unsubstituierten Alkyl(meth)acrylats der Formel II,
(III) 0 bis 5 Mol-% eines Monomers der Gruppe A und
(IV) 0 bis 36 Mol-% eines weiteren vinylischen copolymerisierbaren Monomers der Gruppe B,
worin in den Gruppen (i), (ii) und (iii) die Formel I wie folgt definiert ist: 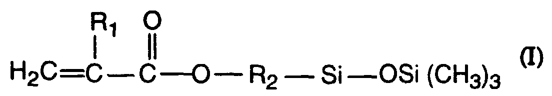 worin R₁ Wasserstoff oder Methyl ist und R₂ für Alkylen mit 1 bis 6 Kohlenstoffatomen steht, und worin in den Gruppen (i), (ii) und (iii) die Formel II wie folgt definiert ist: 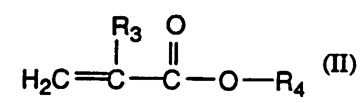 worin R₃ Wasser oder Methyl ist und R₄ für Methyl oder lineares oder verzweigtes C₂-C₁₀-Alkyl steht, das unsubstituiert ist, und
worin in den Gruppen (i), (ii) und (iii) ein Monomer der Gruppe A aus der Gruppe der Monomeren ausgewählt ist, die besteht aus (Meth)acrylsäure, Itaconsäure, Zimtsäure, Crotonsäure, Fumarsäure, Maleinsäure, 2-(Meth)acryloyloxyethylsulfonsäure, 2-(Meth)acrylamido-2-methylpropansulfonsäure, Vinylsulfonsäure, p-Styrolsulfonsäure, Alkylsulfonsäure oder einem Monomer der Formel III 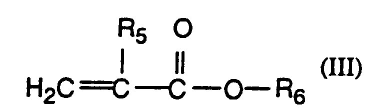 worin R₆ Wasserstoff oder Methyl ist und R₆ für lineares oder verzweigtes Alkyl mit bis zu 10 Kohlenstoffatomen steht, das mit wenigstens einem Vertreter aus der Gruppe substituiert ist, der ausgewählt ist aus Hydroxy, C₁-C₄-Alkoxy, Cl, Br, F, Carboxy, C₁-C₄-Alkoxycarbonyl, C₁-C₄-Alkylcarbonyloxy und Amino, und
wobei das vinylische copolymerisierbare Monomer der Gruppe B weder ein Polymerisationsinitiator, noch ein Vernetzer, noch eine Verbindung aus der Gruppe der Verbindungen der Formeln I oder II, noch eine Verbindung der Gruppe A ist, sondern ein mono-ungesättigtes Monomer darstellt, das mit den Verbindungen der Formeln I und II und mit den Monomeren der Gruppe A copolymerisierbar ist.

2. Verwendung eines Copolymers als medizinischer Klebstoff nach Anspruch 1 mit einer der Gruppe (i) entsprechenden Zusammensetzung der Monomerbeschickung.

3. Verwendung eines Copolymers als medizinischer Klebstoff nach Anspruch 1 mit einer der Gruppe (ii) entsprechenden Zusammensetzung der Monomerbeschickung.

4. Verwendung eines Copolymers als medizinischer Klebstoff nach Anspruch 1 mit einer der Gruppe (iii) entsprechenden Zusammensetzung der Monomerbeschickung.

5. Verwendung eines Copolymers als medizinischer Klebstoff nach Anspruch 1, worin das Silyloxysilan der Formel I 45 bis 55 Mol-% der Zusammensetzung der Monomerbeschickung ausmacht.

6. Verwendung eines Copolymers als medizinischer Klebstoff nach Anspruch 1, worin das Alkyl(meth)acrylat der Formel II 45 bis 55 Mol-% der Zusammensetzung der Monomerbeschickung ausmacht.

7. Verwendung eines Copolymers als medizinischer Klebstoff nach Anspruch 1, worin das Silyloxysilan der Formel I etwa 50 Mol-% der Zusammensetzung der Monomerbeschickung ausmacht.

8. Verwendung eines Copolymers als medizinischer Klebstoff nach Anspruch 1, worin das Alkyl(meth)acrylat der Formel II etwa 50 Mol-% der Zusammensetzung der Monomerbeschickung ausmacht.

9. Verwendung eines Copolymers als medizinischer Klebstoff nach Anspruch 1, worin die Zusammensetzung der Monomerbeschickung im wesentlichen besteht aus
(a) 42 Mol-% bis 58 Mol-% des Silyloxysilans der Formel I und
(b) 42 Mol-% bis 58 Mol-% des Alkyl(meth)acrylats der Formel II.

## Revendications

1. L'utilisation comme adhésif médical d'un polymère préparé à partir du mélange de polymérisation de départ comprenant:
(a) une quantité efficace d'un initiateur de polymérisation;
(b) de 0 à 5 moles % par rapport au total de tous les monomères présents d'un agent de réticulation vinylique copolymérisable; et
(c) un des groupes (i), (ii) ou (iii) suivants:
où (i) comprend
(I) 42 moles % à 58 moles % d'un silyloxysilane de formule I,
(II) 42 moles % à 58 moles % d'un (méth)acrylate d'alkyle non substitué de formule II,
(III) 0 à 5 moles % d'un monomère du Groupe A, et
(IV) 0 à 16 moles % d'un monomère vinylique copolymérisable supplémentaire du Groupe B;
où (ii) comprend
(I) 42 moles % à 58 moles % d'un silyloxysilane de formule I,
(II) 21 moles % jusqu'à moins de 42 moles % d'un (méth)acrylate d'alkyle non substitué de formule II,
(III) 0 à 5 moles % d'un monomère du Groupe A, et
(IV) 0 à 29 moles % d'un monomère vinylique copolymérisable supplémentaire du Groupe B; et
où (iii) comprend
(I) 16 moles % jusqu'à moins de 42 moles % d'un silyloxysilane de formule I,
(II) 42 moles % à 58 moles % d'un (méth)acrylate d'alkyle non substitué de formule II,
(III) 0 à 5 moles % d'un monomère du Groupe A, et
(IV) 0 à 36 moles % d'un monomère vinylique copolymérisable supplémentaire du Groupe B;
où, dans les groupes (i), (ii) et (iii), la formule I est définie de la manière suivante: 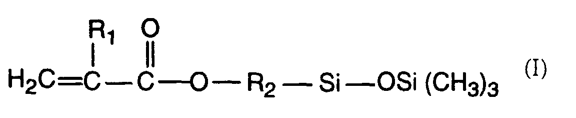 R₁ signifie l'hydrogène ou un groupe méthyle; R₂ signifie un groupe alkylène ayant de 1 à 6 atomes de carbone; et où, dans les groupes (i), (ii) et (iii), la formule II est définie de la manière suivante: 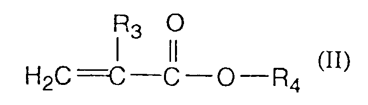 R₃ signifie l'hydrogène ou un groupe méthyle; et R₄ signifie un groupe méthyle ou un groupe C₂₋₁₀alkyle à chaîne linéaire ou ramifié qui est non substitué;
et où dans les groupes (i), (ii), et (iii), un monomère du groupe A est un membre choisi parmi le groupe comprenant l'acide (méth)acrylique, l'acide itaconique, l'acide cinnamique, l'acide crotonique, l'acide fumarique, l'acide maléique, l'acide 2-(méth)acryloyloxyéthylsulfonique, l'acide 2-(méth)acrylamido-2-méthylpropanesulfonique, l'acide vinylsulfonique, l'acide p-styrènesulfonique, l'acide allylsulfonique, et un monomère de formule III: 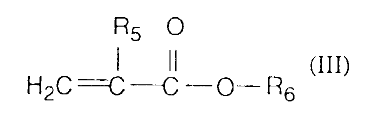 où R₅ signifie l'hydrogène ou un groupe méthyle et R₆ signifie un groupe alkyle linéaire ou ramifié ayant jusqu'à 10 atomes de carbone substitué par au moins un membre choisi parmi le groupe comprenant un groupe hydroxy, C₁₋₄alcoxy, Cl, Br, F, carboxy, C₁₋₄alcoxycarbonyle, C₁₋₄alkylcarbonyloxy, et amino; et ledit monomère vinylique copolymérisable du Groupe B n'est ni un initiateur de polymérisation, ni un agent de réticulation, ni un membre du groupe des composés de formule I ou II, ni un membre du groupe A tel que défini plus haut, mais est un monomère mono-insaturé qui est copolymérisable avec les composés de formule I, II et les membres du Groupe A.

2. Utilisation comme adhésif médical du polymère selon la revendication 1, ayant la composition monomère de départ du groupe (i).

3. Utilisation comme adhésif médical du polymère selon la revendication 1, ayant la composition monomère de départ du groupe (ii).

4. Utilisation comme adhésif médical du polymère selon la revendication 1 ayant la composition monomère de départ du groupe (iii).

5. Utilisation comme adhésif médical du polymère selon la revendication 1 où le silyloxysilane de formule I représente 45-55 moles % de la composition monomère de départ.

6. Utilisation comme adhésif médical du polymère selon la revendication 1 où le (méth)acrylate d'alkyle de formule II représente 45-55-moles% de la composition monomère de départ.

7. Utilisation comme adhésif médical du polymère selon la revendication 1 où le silyloxysilane de formule I représente environ 50 moles % de la composition monomère de départ.

8. Utilisation comme adhésif médical du polymère selon la revendication 1 où le (méth)acrylate d'alkyle de formule II représente environ 50 moles % de la composition monomère de départ.

9. Utilisation comme adhésif médical du polymère selon la revendication 1 où la composition monomère de départ comprend essentiellement:
(a) 42 moles % à 58 moles % du silyloxysilane de formule I; et (b) 42 moles % à 58 moles % du (méth)acrylate d'alkyle de formule II.
